# EUROPEAN PATENT APPLICATION

(11) **EP 3 249 377 A1**
(43) Date of publication of application: **29.11.2017**
(21) Application number: 16171142.9
(22) Date of filing: 24.05.2016
(51) Int. Cl.: G01M 15/14

(54) **ESTIMATING THE LIFE TIME OF A GAS TURBINE COMPONENT**

(71) Applicant: Siemens Aktiengesellschaft, 80333 München (DE)
(72) Inventor: Balandier, Quentin Luc, Lincoln, LN5 7QN (GB)
(74) Representative: Maier, Daniel Oliver

(57) **Abstract**

It is described a method for estimating a life indicating quantity of a component (46, 48, 38, 40, 44, 36, 22, 19, 28, 50) of a gas turbine engine (10), the method comprising: measuring (77) values or amplitudes (105, 107) of at least one engine parameter over time (101), the engine parameter influencing the life of the component; using digital signal processing and determining (79) an amplitude distribution in the time domain (115) and/or an energy or power distribution in the frequency domain (117) of the measured engine parameter; accessing (81) reference data associating at least one reference amplitude of the engine parameter in the time domain and a reference life indicating quantity and/or associating at least one reference amplitude of the engine parameter in the frequency domain and a reference life indicating quantity; and determining (83) the life indicating quantity of the component based on the reference data, the amplitude distribution in the time domain (115) and/or the energy or power distribution in the frequency domain (117).

## Description

### Field of invention

The present invention relates to a method for estimating a life or damage indicating quantity of a component of a gas turbine engine and further relates to an arrangement for estimating a life or damage indicating quantity of a component of a gas turbine engine.

### Art Background

A gas turbine engine comprises a number of components which are subjected to several degradation mechanisms, due to high temperatures, high pressures and high rotational speeds.
Gas turbine components include rotating components subjected to centrifugal loads such as blades, rotors, discs and static components such as nozzles guides vanes, casings, combustion chamber...

Degradation mechanisms include Low Cycle Fatigue (LCF), High Cycle Fatigue (HCF), creep, oxidation, erosion, material long term aging, fretting, wear... and can lead to the deterioration of gas turbine components.

To preserve the components integrity during engine operation, components lives are defined.

A component cyclic life may be defined. For example, a cyclic life may define a number of allowable starts (0 RPM) to the maximum shaft rotational speed for a given component.

A component time dependant life may also be defined. For example, a time dependant life may define a number of allowable hours at a given steady state condition for a given component.

In relation to life, a damage value may be defined. The damage is a numerical value between 0 and 1. For example, if the damage reaches a value of 1, the remaining life (in cycles or hours) is 0. If the damage reaches a value of 0.5, the remaining life is 50% of its original value.

A specific damage value may be defined for each possible degradation mechanism of the component considered.

A component prescribed safe life (or hard life) may be defined. Some components, whose failure will result in the release of high energy debris, have a prescribed safe life. Components have to be replaced before the components reach the prescribed safe life.

Conventionally, the prescribed safe life is defined by conventional stress and lifing analysis.
- Components stresses and temperatures may be estimated by Finite Element analysis and Computational Flow Dynamics (CFD) analysis. Material behaviour - possibly at a given stress and temperature - may be characterised by specimen testing and/or component rig test.
- Conventionally, the prescribed safe life is defined for simplified loading cycles, which may not be truly representative of the engine operating conditions, and for maximum loading conditions i.e., the prescribed safe life is defined for an "envelope" loading cycle and is therefore conservative.
- The stress and lifing methods have significant shortfalls due to the difficulty in representing the components stress levels and temperatures in the computational analysis and the engine loading conditions in the material testing. Description of the material behaviour for analysis requires complex formulations.
- Definition of absolute component lives - especially at high temperatures - is difficult. For this reason, components prescribed safe lives are generally defined with a high degree of conservatism.

Second, a life on condition (or soft life) may also be defined. Results of monitoring inspections (for example borescope inspection of turbine blades) or engine trend monitoring (for example increase of the turbine temperatures), can trigger engine removal. Conventionally, life on condition may be applied for complex degradation mechanisms, which are difficult to predict.

Both prescribed safe lives and life on condition can trigger engines removal from operation.

Conventional maintenance interval determination (MID) algorithms may be defined to increase the components lives. The goal of the algorithms is to recalibrate the generic component lives defined by the engine manufacturer to the specific operation of the engine owner using measured operational parameters of the gas turbine.
However, MID algorithms are mainly not fully implemented due to their complexity (highly complex loading histories of the engine parameters to be captured, complex lifing formulations for different damaging mechanisms, requiring material behaviour formulations, damage accumulation rules, rainflow rules, mean stress corrections rules,...). Some complex material degradation mechanisms are not covered by conventional MID algorithms.

Conventional MID algorithms are based on analog databases of engine recorded parameters which are computationally heavy, difficult to handle and to interpret using the complex and deterministic conventional lifing methods.

Conventionally, a rainflow-counting algorithm may be applied for the analysis of fatigue data in order to reduce an history of varying stress into a reduced set of simple stress reversals. According to this algorithm, the time history of an operational parameter may be reduced to a sequence of tensile peaks and compressive valleys. The thereby simplified history of the time course of the operational parameter is then plotted in a graph having the operational parameter axis oriented as a horizontal axis and having the time axis oriented vertically. Further, each tensile peak is imagined as a source of water that "drips" down the cycle and the number of half-cycles are counted by looking for terminations in the flow occurring when the flow reaches the end of the time history, merges with a flow that started at an earlier tensile peak or flows when an opposite tensile peak has greater magnitude. These steps are repeated for compressive valleys. Further, a magnitude to each half-cycle is assigned equal to the stress difference between its start and termination and half-cycles of identical magnitude (but opposite sense) are paired up to count the number of complete cycles. For the number of complete cycles, the damage or remaining life may be estimated using material laws or material rules.

In the conventional lifing methods, a significant difficulty is linked to the distinction and/or overlap between steady state or mean loading vs. transient or cyclic loading. Especially, lifing for transient or cylic loading involves correction for steady state loading (for example Walker, Morrow, or Smith Watson Topper type corrections...). Overall, in the conventional methods, the damaging contribution of steady state vs. cyclic loading is difficult to capture and to assess accurately.

In the state of the art, no robust and integral process exists for the customer to assess the condition of the engine performance, reliability and life. Reliability issues may still exist with components dysfunction or failure in service. On the other hand, components may not be used up to their life limit, if the estimations are too conservative.

At the design phase, the lack of accurate predictive methods - at least for some degradation mechanisms - may lead to costly conservative choices in the material or surface coatings selection, component weight, and the design of cooling flows for example.

Furthermore, in the conventional methodologies, no visual tool exists to interpret the engine condition and remaining life.

Thus, there may be a need for a method and for an arrangement for estimating a life or damage indicating quantity, wherein at least some of the disadvantages or problems of the prior art are overcome.

### Summary of the Invention

This need may be met by the subject matter according to the independent claims. Advantageous embodiments of the present invention are described by the dependent claims.

According to an embodiment of the present invention it is provided a method for estimating a life indicating quantity (life time/estimating damage) of a component of a gas turbine engine, the method comprising (continuously) measuring and sampling values or amplitudes of at least one engine parameter over time, the engine parameter influencing the life or damage of the component, analysing the measured engine parameter signal in the time domain/and or frequency domain (in particular involving determining an amplitude distribution in the time domain and/or an energy or power distribution of the measured engine parameter in the frequency domain), accessing reference data associating at least one reference amplitude in the time domain and or frequency domain of the engine parameter and a reference life indicating quantity (in particular including associating at least one reference time change of the amplitude of the engine parameter and a reference life indicating quantity) and determining the life indicating quantity of the component based on the reference data, (in particular the amplitude distribution and/or the energy or power distribution) and signal representation in the time domain / and or frequency domain.

The life indicating quantity may for example be or comprise a remaining life time, an estimated degree of damage, a degree of deterioration, or the like. The life indicating quantity may comprise at least one of a remaining life time, a cumulated damage, a cumulated life usage, a maintenance interval. The life indicating quantity may be a numerical value or may be one of several categories or classes. In particular, the life indicating quantity may be related to the lifing of the component which may indicate the remaining time the component is estimated to function per design intent or exhibit a proper structural state.

The gas turbine engine may comprise a compressor section, a combustor section and a turbine section. A shaft may run through all sections and may have connected to it rotor blades in the compressor section which are driven by rotor blades in the compressor-turbine section, in order to generate compressed air which is delivered to plural burners which burn fuel using the compressed air. The exhaust of the burned fuel may drive the rotor blades of the power turbine section which is arranged downstream of the combustor section.

The component of the gas turbine engine may be any component, such as a rotor blade in the compressor section or in the turbine section, a shroud in one of the gas turbine sections, a nozzle guide vane in the compressor section or the turbine section, a shroud or casing portion of the compressor section, the combustor section or the turbine section, a sealing component of any of the sections, the shaft of the gas turbine or the one or more shafts of the gas turbine, the rotors or discs of the gas turbine, or any other component of a gas turbine engine that is subject to life degradation mechanism(s).

The engine parameter may for example be a rotational speed of the rotor shaft, a temperature at different positions of the gas turbine, in particular close to the component to be monitored, pressure value at one or more locations of the gas turbine, in particular close to the monitored component, fuel flow, air inlet temperature, turbine exit temperature, temperature of the compressed air.

Alternatively, in a subsequent stage of the process, the engine parameters can be presented in a non-dimensional form such as pressure ratios, (shaft speed / root square of temperature), etc.

Measurements of the operational parameter may be performed using particular sensors or measuring devices, such as a pressure sensor, a temperature sensor, a flow sensor or the like. The sensors may be installed at plural locations within the gas turbine engine. The method may not require utilizing all engine parameters which are conventionally measured during operation of the gas turbine. Only those engine parameters may be used, in particular only at those locations, which have an influence on the integrity, the physical condition or the physical state of the component under consideration. For example, the pressure, temperature may be required to be only processed at locations close to the component under consideration.

The signal may be sampled and digitized. The signal may be processed and represented in the time domain and/or frequency domain.

In the time domain, the amplitude distribution may describe the distribution of the different measured values or amplitudes of the engine(s) parameter(s) considered. The amplitude distribution may for example give information as to how probable it is that a given value or amplitude is (or has been) measured. For example, the amplitude distribution indicates how probable it is or was that a first amplitude was measured compared to a second amplitude. The amplitude distribution may also be indicative of a histogram of the measured time course of the engine parameter.

The frequency domain representation or spectral density may indicate a distribution of changes of the amplitude of the engine parameter, the energy distribution or power distribution of the engine parameter signal in the frequency spectrum. The energy or power spectrum may be related to a Fourier or other transformations of the measured engine parameter. In particular, the energy or power spectrum of the signal may comprise intensities of coefficients of a Fourier expansion for different frequencies. The frequency distribution may represent an expansion of the time course of the measured engine parameter, for example using as base functions frequent trigonometric functions, like sine or cosine or other function, as used for example in wavelet transformations. Calculation of the signal energy or power distribution in the frequency spectrum may involve a Fourier transformation or a square of a Fourier transformation or other alternative transformations between time and frequency domains, in particular, any discrete transformation used in digital signal processing.

The reference data may have previously been obtained and may be stored in an electronic storage. The reference data may have been generated by assessing the life of the same or similar (reference) component - or a component at least having the same or similar material it is made of - for simplified loading or inputs conditions. The reference component may have been subjected to stress by subjecting the reference component to temperature, pressure, shaft speeds variations or which may have been subjected to conditions of constant pressure or temperature or shaft speed or in particular constant operational parameter or a group of operational parameters. The identical or a related engine parameter(s) compared to the engine parameter(s) which is measured for the particular component may also have been defined for the simplified loading or input cycles for the reference component.

The reference component may have been physically tested or alternatively may have been analysed using conventional stress and lifing analyses.

The time course of the reference engine parameter the reference component has been subjected to may not be identical to the time course the component under consideration is subjected to. However, portions of the time course of the reference engine parameter, the reference component is subjected to may be equal or at least similar to the time course of the engine parameter the component under consideration is subjected to. For these same or similar sections of the time course, the associated life indicating quantity is known for the reference component which may enable to infer a life indicating quantity also to the component under consideration with respect to this particular section of the time course of the engine parameter. Other sections of the time course of the measured gas turbine engine operational parameter for which there is no reference data available, material laws, extrapolation and/or interpolation may be used to also deduce or determine a partial life indicating quantity. Thus, although not for all amplitudes in the determined time domain amplitude distribution, a corresponding reference life indicating quantity is available from the reference data, nevertheless, for these amplitudes, the partial life indicating quantity may be approximated or estimated using physical considerations, in particular material laws, especially scaling laws (for example scaling laws for difference in stress levels or scaling laws for difference in temperature levels).

Also not all frequencies included in the energy or power spectrum (in particular frequency distribution) of the measured engine parameter may be comprised in the time course of the reference engine parameter comprised in the reference data. Nevertheless, also the corresponding partial life indicating quantities may be approximated, interpolated or extrapolated or estimated using material laws, especially scaling laws.

Determining the amplitude distribution in the time domain and/or the energy or power distribution in the frequency spectrum may involve digitizing the measured engine parameter. Furthermore, this determination may involve binning, and/or Fourier or similar transformation and/or determination of energy or power spectrum in the frequency domain. Thereby, these calculations may be performed in a digital signal or data processing system.

Embodiments of the present invention may achieve the goal to define the remaining life of a component from the recorded history of engine parameter during the engine operation. In addition, embodiments may allow detecting excursions of engine parameters and preventing component overloads and failures (health monitoring). Moreover, the method may be extended to define conditions for accelerating testing of a component from the digitized sampled data. The method may be applied to a rotating component or to a static component of a gas turbine engine.

The life indicating quantity may relate to the component remaining life or could indicate excursion of engine parameters.

According to an embodiment of the present invention, the method may further comprise declaring for each amplitude in the time domain amplitude distribution an associated first partial life indicating quantity and/or declaring for each frequency in the energy or power distribution an associated second partial life indicating quantity, wherein determining the life indicating quantity of the component comprises using the declared first partial life indicating quantities and/or the declared second partial life indicating quantities.

The time domain amplitude distribution alone taken together with the reference data may indicate the first partial life indicating quantity without using the energy or power distribution in the frequency spectrum. Similarly, the energy or power distribution alone taken together with the reference data may allow calculating a second partial life indicating quantity. Thereby, two methods may be used to estimate or to derive life indicating quantities. The first and second partial life indicating quantity may then be combined, to finally determine the life indicating quantity. In other embodiments, a plausibility check may be performed by comparing the first and second partial life indicating quantity with life defined from service inspection of components (i.e. service returns).

According to an embodiment of the present invention, determining the life indicating quantity comprises computing a sum of reference life indicating quantities and/or of the declared first partial life indicating quantities and/or of the declared second partial life indicating quantities weighted using the amplitude distribution in the time domain and/or the energy or power distribution in the frequency domain.

In the time course of the measured engine parameter, each section may contribute to the final life indicating quantity. Each section of the time course of the measured engine parameter may have characteristics, such as amplitude of the engine parameter and change with time of the engine parameter. These characteristics are reflected in the amplitude distribution and the energy or power distribution in the frequency domain, in particular regarding the probability of the section being encountered during the total or truncated time course. Each particular section of the time course of the engine parameter may contribute to a specific magnitude to the final life indicating quantity. By summing all these contributions considering the amplitude distribution in the time domain and the energy or power distribution in the frequency domain and the reference data, the life indicating quantity may be reliably calculated.

According to an embodiment of the present invention, the method further comprises using extrapolation and/or interpolation and/or materials laws/models to determine reference data indicating quantities for amplitudes and/or changes of amplitudes comprised in the amplitude distribution and/or energy and /or power distribution, which are not present in the reference amplitude and/or reference time change of the amplitude, wherein the life indicating quantity is further determined based on the further reference life indicating quantities.

The further reference life indicating quantity may supplement the reference data for amplitude and frequency values which are comprised in the amplitude distribution and the frequency distribution which are however not comprised in the original reference data. Thereby, the estimating of the life indicating quantity may still be refined. According to an embodiment of the present invention, the further reference life indicating quantities are included in the sum weighted using the amplitude distribution in the time domain and/or the energy or power distribution in the frequency domain.

According to an embodiment of the present invention, determining the amplitude distribution and/or the energy or power distribution comprises sampling the measured engine parameter; and/or digitizing the measured amplitudes and/or time changes of the measured amplitudes and/or binning the digitized amplitudes and/or time changes and/or counting a number of samples in each bin.

The sampling may occur regularly, such as with a constant time interval in-between, such as 1 ms, 10 ms - 5 s, 1 ms - 1 h, or the like. The binning of the digitized amplitudes may involve counting the number of samples having amplitudes in one of a number of different ranges, the ranges in particular not overlapping and being immediately adjacent to each other. Thereby, a simple processing is enabled simplifying the implementation.

According to an embodiment of the present invention, the method further comprises determining a temperature (and/or stress) of the component, correcting the reference data for the determined temperature (and/or stress), and using the corrected reference data for determining the life indicating quantity of the component.

For example, if the reference data were defined (e.g. measured) at a reference temperature different from the temperature the component under consideration was subjected to, the life of the component is expected to be different from the life as indicated by the reference life indicating quantity. In this case, the reference life indicating quantity may be corrected and considered in the final determination of the life indicating quantity of the component under consideration.

According to an embodiment of the present invention, correcting the reference data for the determined temperature (and/or stress) comprises accessing at least one generic table of generic properties of the component's material, associating the life indicating quantity as a function of temperature (and/or stress), and/or accessing at least one specific item or characteristic of the material properties of the component, associating the life indicating quantity as a function of temperature (and/or stress). Thereby, knowledge from material science may be utilized in the presented method.

According to an embodiment of the present invention, the at least one engine parameter (in particular comprising several engine parameters) may have been selected particularly for the component under consideration from plural engine parameters. The selection may restrict the number of operational parameters to be considered in the method to the most important ones, thereby simplifying the method.

According to an embodiment of the presented invention, the engine signal may be truncated.

According to an embodiment of the present invention, the signal representation in the frequency domain may be restrained to specific frequencies characteristics of the engine operation, thereby condensing the amount of data to be processed for life estimation.

According to an embodiment of the present invention, a relationship between the engine parameter and at least one physical influence (such as stress, temperature) the component is exposed to is defined. Instead of directly using the measured engine parameter, also the (derived) physical influence, such as stress, temperature may be analysed regarding its amplitude distribution and/or power distribution in the frequency spectrum and may further downstream the method be used from determining the life indicating quantity.

The method may further comprise the definition, in particular utilizing material laws, of a relationship between the at least one physical influence and the life indicating quantity.

According to an embodiment of the present invention, the method further comprises correlating at least one (p2, p3,...) of the at least one engine parameter with one other (p1) of the at least one engine parameter, transforming the amplitude distribution and/or the frequency distribution of the measured engine parameter to an amplitude distribution and/or a frequency distribution of the other one of the at least one engine parameter.
Most engine parameters may be related to each other (or be correlated to or dependent on): for example a shaft speed increase may lead to a temperature and pressure increase.
The use of correlation between parameters may enable to reduce the method by considering a low number of parameters in the life declaration.

According to an embodiment of the present invention, the life of the component can be defined from two engine parameters with a low level of correlation. In this case, all the lifing process and specifically its representation may be similar to the one done for image processing. E.g. the amplitude and/or energy or power distribution may be represented as two dimensional images, each dimension representing one of the two engine parameters.

According to an embodiment of the present invention, the method further comprises checking a consistency of the determined life indicating quantity with further measured data from service returns and correcting the estimated life indicating quantity parameters based on a degree of consistency. Thereby, the method may continuously be improved.

The life indicating quantity may comprise at least one of: a remaining life time, a cumulated damage, a cumulated life usage, a maintenance interval, or the like.

It should be understood that features individually or in any combination disclosed, described or applied to a method for estimating a life indicating quantity of a component of a gas turbine engine may, individually or in any combination also applied to an arrangement for estimating a life indicating quantity of a component of a gas turbine engine according to embodiments of the present invention and vice versa.

According to an embodiment of the present invention it is provided an arrangement for estimating a life indicating quantity (life time/estimating damage of a component of a gas turbine engine, the arrangement comprising an input port adapted to receive measuring amplitudes of at least one engine parameter over time, the engine parameter influencing the life of the component, and a processor / electronic hardware adapted to determine an amplitude distribution in the time domain and/or an energy or power distribution in the frequency domain of the measured engine parameter, to access reference data associating at least one reference amplitude of the engine parameter and a reference life indicating quantity and/or associating at least one reference time change of the amplitude of the engine parameter and a reference life indicating quantity, and to determine the life indicating quantity of the component based on the reference data, the amplitude distribution in the time domain and/or the energy or power distribution in the frequency domain.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to illustrated or described embodiments.
Fig. 1 schematically illustrates a sectional view of a gas turbine engine having an arrangement for estimating a life indicating quantity of a component according to an embodiment of the present invention;
Fig. 2 illustrates a method scheme of a method for estimating a life indicating quantity of a component of a gas turbine engine according to an embodiment of the present invention;
Fig. 3 illustrates a scheme according to another embodiment of the present invention;
Fig. 4 illustrates a graph depicting a time course of a measured operational parameter as used in an embodiment of the present invention;
Fig. 5 illustrates an amplitude distribution in the time domain considered in a method according to an embodiment of the present invention;
Fig. 6 illustrates a power distribution in the frequency domain as considered in a method according to an embodiment of the present invention.

### Detailed Description

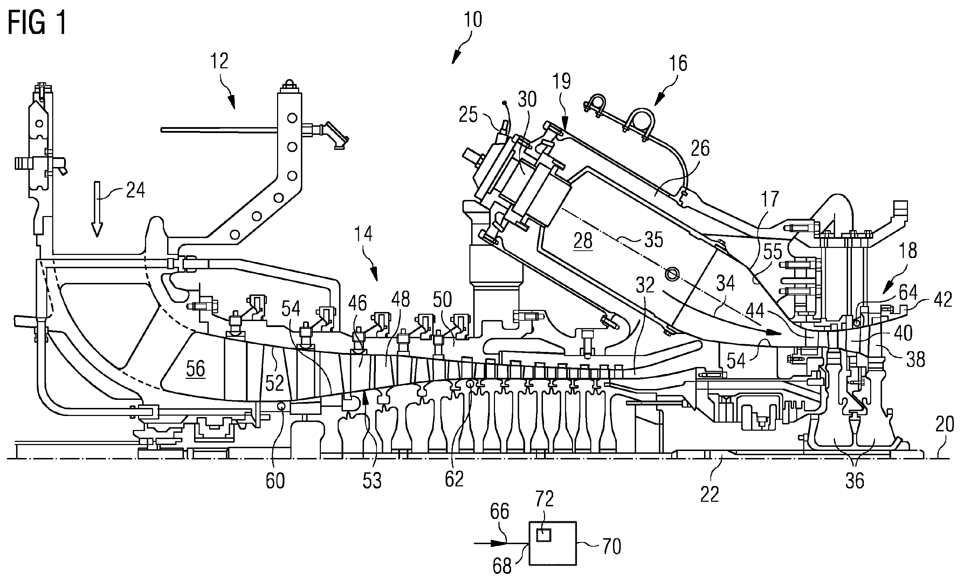

FIG. 1 shows an example of a gas turbine engine 10 in a sectional view. The gas turbine engine 10 comprises, in flow series, an inlet 12, a compressor section 14, a combustor section 16 and a turbine section 18 which are generally arranged in flow series and generally about and in the direction of a longitudinal or rotational axis 20. The gas turbine engine 10 further comprises a shaft 22 which is rotatable about the rotational axis 20 and which extends longitudinally through the gas turbine engine 10. The shaft 22 drivingly connects the turbine section 18 to the compressor section 14.

In operation of the gas turbine engine 10, air 24, which is taken in through the air inlet 12 is compressed by the compressor section 14 and delivered to the combustion section or burner section 16. The burner section 16 comprises a burner plenum 26, one or more combustion chambers 28 and at least one burner 30 fixed to each combustion chamber 28. The combustion chambers 28 and the burners 30 are located inside the burner plenum 26. The compressed air passing through the compressor 14 enters a diffuser 32 and is discharged from the diffuser 32 into the burner plenum 26 from where a portion of the air enters the burner 30 and is mixed with a gaseous or liquid fuel. The air/fuel mixture is then burned and the combustion gas 34 or working gas from the combustion is channeled through the combustion chamber 28 to the turbine section 18 via a transition duct 17.

This exemplary gas turbine engine 10 has a cannular combustor section arrangement 16, which is constituted by an annular array of combustor cans 19 each having the burner 30 and the combustion chamber 28, the transition duct 17 has a generally circular inlet that interfaces with the combustor chamber 28 and an outlet in the form of an annular segment. An annular array of transition duct outlets form an annulus for channeling the combustion gases to the turbine 18.

The turbine section 18 comprises a number of blade carrying discs 36 attached to the shaft 22. In the present example, two discs 36 each carry an annular array of turbine blades 38. However, the number of blade carrying discs could be different, i.e. only one disc or more than two discs. In addition, guiding vanes 40, which are fixed to a stator 42 of the gas turbine engine 10, are disposed between the stages of annular arrays of turbine blades 38. Between the exit of the combustion chamber 28 and the leading turbine blades 38 inlet guiding vanes 44 are provided and turn the flow of working gas onto the turbine blades 38.

The combustion gas from the combustion chamber 28 enters the turbine section 18 and drives the turbine blades 38 which in turn rotate the shaft 22. The guiding vanes 40, 44 serve to optimise the angle of the combustion or working gas on the turbine blades 38.

The turbine section 18 drives the compressor section 14. The compressor section 14 comprises an axial series of vane stages 46 and rotor blade stages 48. The rotor blade stages 48 comprise a rotor disc supporting an annular array of blades. The compressor section 14 also comprises a casing 50 that surrounds the rotor stages and supports the vane stages 48. The guide vane stages include an annular array of radially extending vanes that are mounted to the casing 50. The vanes are provided to present gas flow at an optimal angle for the blades at a given engine operational point. Some of the guide vane stages have variable vanes, where the angle of the vanes, about their own longitudinal axis, can be adjusted for angle according to air flow characteristics that can occur at different engine operations conditions.

The casing 50 defines a radially outer surface 52 of the passage 56 of the compressor 14. A radially inner surface 54 of the passage 56 is at least partly defined by a rotor drum 53 of the rotor which is partly defined by the annular array of blades 48.

The present invention is described with reference to the above exemplary turbine engine having a single shaft or spool connecting a single, multi-stage compressor and a single, one or more stage turbine. However, it should be appreciated that the present invention is equally applicable to two or three shaft engines and which can be used for industrial, aero or marine applications.

The terms upstream and downstream refer to the flow direction of the airflow and/or working gas flow through the engine unless otherwise stated. The terms forward and rearward refer to the general flow of gas through the engine. The terms axial, radial and circumferential are made with reference to the rotational axis 20 of the engine.

The gas turbine 10 illustrated in Fig. 1 further comprises several sensors 60, 62, 64 for measuring a number of different or same operational parameters, such as temperature, pressure, flow or the like at different locations of the gas turbine 10. The sensors 60, 62, 64 may comprise conventional sensors, installed in conventional gas turbines.

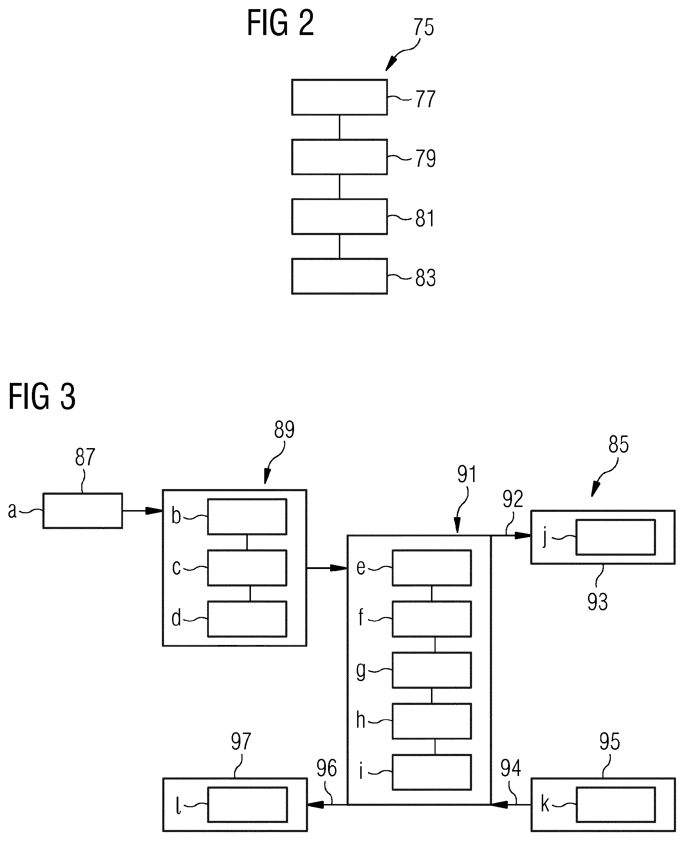

The gas turbine 10 further comprises an arrangement 70 for estimating a life indicating quantity of a component of the gas turbine 10 according to an embodiment of the present invention. The arrangement 70 is adapted to carry out a method for estimating a life indicating quantity of a component of the gas turbine engine 10, as is illustrated in a method scheme 75 in Fig. 2.

In a method step 77, amplitudes of at least one engine parameter, such as pressure, temperature, at a particular location, is measured over time, wherein the engine parameter influences the life of a component under consideration.

In a method step 79, an amplitude distribution in the time domain and/or an energy or power distribution in the frequency domain of the measured engine parameter(s) is determined. In a further method step 81, reference data associating at least one reference amplitude of the engine parameter and a reference life indicating quantity and/or associating at least one reference time change of the amplitude of the engine parameter and a reference life indicating quantity are accessed. In a further method step 83, the life indicating quantity of the component is determined based on the reference data, the amplitude distribution and/or the frequency spectrum distribution.

The component under consideration may for example comprise a rotor blade in the compressor section, a rotor blade in the turbine section, a nozzle guide vane in the compressor section, a nozzle guide vane in the turbine section, a shroud portion in the turbine section or the compressor section, a portion of a casing of the compressor section, the combustor section or the turbine section, shafts, rotors or discs, or any rotating or static component of the gas turbine 10 illustrated in Fig. 1. The component may for example be a vane 46 of the compressor section, a rotor blade 48 of the compressor section, a casing 50 of the compressor section, a turbine blade 38, a compressor rotor, a turbine disc (36), a guide vane 40, 44, or any portion of a static portion, such as a shroud portion, or a core portion of a casing.

The arrangement 70 receives measurement data measuring the engine parameter from one or more of the sensor devices 60, 62, 64. Their measurement signals are collectively indicated with reference sign 66 in Fig. 1. The arrangement 70 receives the measurement values 66 at an input port 68. The arrangement 70 further comprises a processor and electronic components 72 which is adapted to carry out the method illustrated in a schematic view in Fig. 2.

Fig. 3 illustrates a diagram 85 of a method according to another embodiment of the present invention, in particular also implementing the method 75 illustrated in Fig. 2. The method 85 comprises a pre-selection part 87, a part 89 of lifing of input signals using conventional analysis techniques, and a part 91 of engine signal characterization, a part 93 of a life declaration which method parts 89, 91, 93 comprise several sub-steps. The method 85 further comprises the parts 95 and 97.

The method part 87 comprises of the step a, where the relevant engine parameters for the component to be lifed are selected, such as shaft speeds, temperature parameters, optionally pressure parameters. The method part 89 comprises of the steps b, c and d, wherein in step b, the relationships between selected engine parameters and a physical influence on the component, such as the temperature and the stress, are defined. In the method step c, the relationship between the life time and the physical influence, such as stress and/or temperature, is defined, in particular using normalized standard tests from specimens or component rigs tests or engine test. In the method step d, the references lifing points from analysis to input signals (squares cycles, standard oscillations cycles) are defined using conventional stress and lifing techniques and results of standard/normalized material tests.

The method part 91 comprises the steps e, f, g, h and i.

In the method step e, the measured engine parameters are sampled.

In the method step f, the measured engine parameter histories are digitized.

In the method step g, the signal is cleaned, in particular using filters and restoration.
Also in the step g, the signal can be truncated.

In the method step h, the correlation among measured engine parameters are defined.

In the method step i, the signal is characterized, in the time domain and frequency domain, in particular by calculating an amplitude distribution and energy/power density spectra.

The method part 93 comprises the step j, where the life is declared from convolution operations based on the method part 91.

The method part 95 comprises a step k where a life is declared from a service inspection or an engine test result. In the step k, the engine has been subjected to a complex history of engine parameters.
This method part 95 provides a feedback to the method part 91, as indicated by the arrow 94.

Furthermore, the method part 97 comprises a step 1 where the lifing parameters are defined from a de-convolution operation of the output results (i.e. life defined from inspection) of the system subjected to a complex loading history, wherein results from the method part 91 are used as indicated by the arrow 96. The de-convolution operation may enable to determine the system response to simple input signals. This may be especially beneficial to assess the fundamental damaging impact of complex degradation mechanisms, which are difficult to characterise using conventional testing methods.

The particular method steps a to k, as performed in an embodiment are further explained below:

### Step a

The lifing engineer selects a serie of engine parameters (p1, p2, pi...) monitored in service and relevant for the component to be lifed. For example, for a turbine blade, the chosen parameters could be (turbine shaft speed, and Turbine Entry Temperature).

### Step b

Using a standard stress finite element model, the lifing engineer defines the relationships between:
- component stress vs. engine parameters
- component metal temperature vs. engine parameters
- variation of component stresses vs. variation of engine parameters
- variation of component metal temperature vs. variation of engine parameters

### Step c

From standard material test results, the lifing engineer defines the relationship between:
- component (stress & temperature) vs. component life
- variation of component (stress & temperature) vs. component life

Specimen and component material testing give relationships between static load level histories and component degradation or lives (for example, from normalized creep or oxidation tests) at a given temperature. Relationships can be digitized per load level.

Specimen and component material testing give a relationship between a difference in load level and a difference in degradation or life (for example, from normalized LCF or crack propagation tests) at a given temperature. Relationships can be digitized per load variation level.

### Step d (and k)

From standard analysis, engine test or service returns, the lifing engineer defines one or several references life values against simple input histories of engine parameters.

Reference lives can be component life declared for continuous maximum operation using standard stress and lifing analysis, component life obtained from rig test or engine test results (step d), or component life obtained from fleet leader operation (step k)...

The reference points define a specific engine parameter history (see description below) to reach a dimensioning or failure criterion (for example, engineering crack, level of oxidation, etc...).

The reference points can be corrected once service experience cumulates.

The reference points can be completed with additional control points for different loading histories or different sources. The control points should fit the component life declaration process as described in Figure 1. If not, re-calibration of the life declaration parameters is needed.

### Step e

From standard diagnostic system, the engine parameters are sampled at regular time interval (for example every second). Sampling rates should be high enough to cover for engine transient effects.

### Step f

Sampled engine parameters data are quantized and transformed into binary numbers.

E.g., if the signal (i.e. engine parameter) is converted into a 4 bits format; the signal can equal 2^4=16 different values. For the current application, 8 or 16, or more bits formats may be used.

The signal can be restored, filtered and / or truncated.

The signal can be characterized in the time domain (relevant for time dependent degradation mechanisms such as creep, oxidation ...). A digital counter can store the number of occurrences of one or more specific engine parameters within a predetermined band.

The signal can be characterized in the frequency domain. A digital counter can record the variation of one or more specific engine parameters (relevant for Low Cycle Fatigue, High Cycle Fatigue for example) and can be counted within pre-determined bands. The signal can be characterized in the frequency domain using transformations and then energy or power distribution representation in the frequency spectrum. Especially, the representation in the frequency domain may clearly show the steady state contribution (f=0) in comparison to the cyclic or transient contributions (f≠0) in the energy or power distribution of the signal (in particular the measured, sampled engine parameter). This may considerably ease the weighting of each contribution type.

### Step g

Using correlation algorithms, engine parameters (p2,...pi) can be correlated with p1. This gives all the outputs defined above against the single parameter p1 (for example turbine shaft speed).

### Step h

### Weighting of the sampled points:

### Generic Material / Alloy properties

For a specific alloy, typical and minimum material properties are known and characterized by test (for example proof strength Pr0.2, creep strength, crack growth rates at a given stress intensity, other material characteristics can be considered). Values are tabulated as a function of the temperature, see example below:
T (Pr0.2, min) (Pr0.2, typ) (Creep min) (Creep typ) (CP min, at delta K=20MPam0.5) (CP typ,
at delta K=20MPam0.5)

| | | |
|---|---|---|
| 100 | M11 | M21 |
| 150 | M12 | M22 |
| 200 | M13 | M23 |
| ... | ... | ... |
| 600 | M1n | M2n |

Weighting of the sampled points:
For each band in the time or frequency for a specific engine parameter, a weight can be applied to the point to reflect the change in material properties with temperature. This weight (or penalty) can be defined using a recorded temperature parameter and the material laws described above. The chosen material law can be the more adequate for the failure mechanism considered or the one giving the most conservative weight from all material datasets available.

### Step i

For each band of the digitized amplitude distribution and power density spectrum, a relative damage is defined.

From the material testing data, a life or a level of damage can be defined for normalized static or dynamic histories.

From Miner types rules, damage accumulation rules can be defined to sum the contribution of each band in the amplitude and/or energy/power distributions.

### Step j

### Component life declaration:

- the weighted distributions of the relevant parameter histories in the time domain and / or frequency domain,
- the damaging and scaling laws from material testing,
- the lives declared for the chosen reference (or maximum) points,
allow declaring a life for the component.

### Step k

### Feeback loop:

Once other data points (i.e. relationships lives vs. histories of parameters) cumulate from service returns, the consistency of the algorithm can be checked (i.e. fitting of the points vs. predictions). If not, the lifing parameters can be recalibrated.

In addition, the engine parameters distributions can be captured across a fleet of operators to define life and reliability statistics.

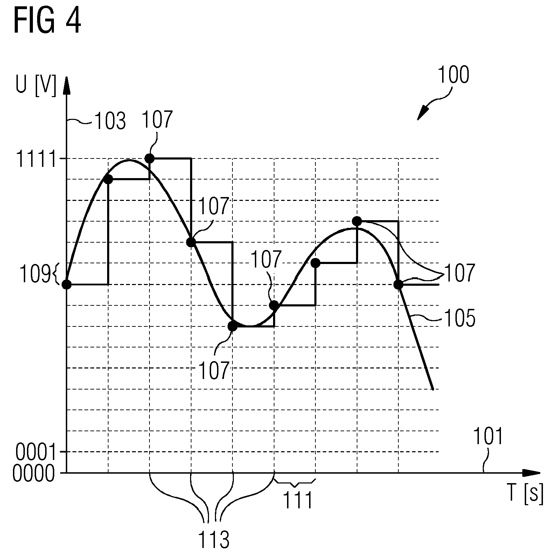

Fig. 4 illustrates a graph 100 having an abscissa 101 indicating the time and having an ordinate 103 indicating a magnitude of a measured operational parameter of the gas turbine 10 illustrated in Fig. 1. A curve 105 represents the continuous time course of the amplitude of the operational parameter. The points 107 represent the digitized samples of the originally continuous and analog amplitude of the operational parameter 105. Furthermore, Fig. 4 illustrates bins 109 which are non-overlapping and adjacent to each other according to which the samples 105 are categorized or binned. The samples 107 are taken in a periodic manner having a time interval 111 in between. Each amplitude 105 measured at one of the time points 113 is associated with one of the bins 109.

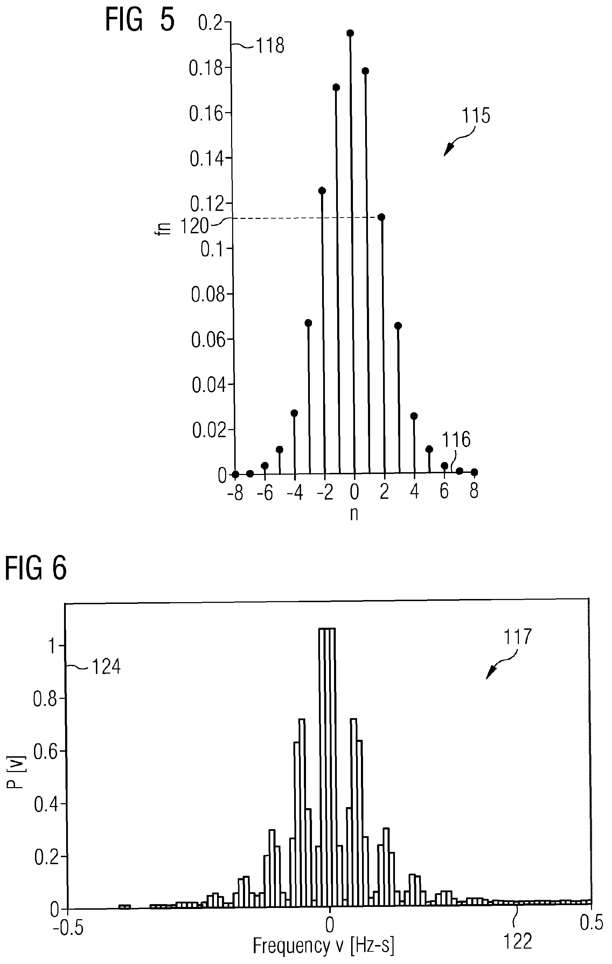

Regarding the method step h describe above, Figs. 5 and 6 illustrate an amplitude distribution in the time domain 115 and a power density distribution in the frequency domain 117, respectively.

In Fig. 5, the abscissa 116 indicates the bin number (being associated with a particular range of values of the amplitude operational parameter) and the ordinate 118 indicates the frequency the operational parameter measured falls into the corresponding bin. For example, a frequency of samples in bin number 2 is about 0.107 (reference sign 120) during the time course of the measured operational parameter.

In Fig. 6, the abscissa 122 indicates the frequency and the ordinate 124 indicates the strength or intensity of the coefficient having the frequency as indicated on the abscissa 122. The frequency distribution 117 comprises information regarding how often a particular change of the amplitude of the operational parameter occurred during the measured time course.

According to embodiments of the present invention, advantage of digitalization processes for data sampling is taken (static and dynamic). Thereby, easy coding, quality, robustness, encryption, transmission and use of the data for different applications are enabled. Further, visualization, statistical treatment and accelerating testing may be enabled. The use of standardized signal treatment outputs (amplitude distribution and power density spectrum) may simplify the representation of the loading histories for lifing (specifically, removal of the complex rainflow formulation as has been used in conventional methods). The methodology may be more performant, robust and easier as conventional techniques and may allow implementing an MID process. The results of the method may be visualized, for example involving parameter histories, fleet statistics and resulting lives.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

### List of reference signs:

- 10: gas turbine
- 12: inlet
- 14: compressor section
- 16: combustor section
- 17: transition duct
- 18: turbine section
- 19: combustor can
- 20: rotational axis
- 22: shaft
- 24: air
- 26: burner plenum
- 28: combustion chamber
- 30: burner injection portion
- 32: diffuser
- 34: combustion gas
- 36: blade disk
- 38: turbine blades
- 40: guide vanes
- 42: stator
- 44: guide vanes
- 46: vane stage
- 48: rotor blade stage
- 50: casing
- 52: radially outer surface
- 54: radially inner surface
- 56: passage
- 60, 62, 64: operational parameter sensor
- 66: measurement signals
- 68: input port
- 70: arrangement for estimating a life indicating quantity
- 72: processor
- 75: method
- 77, 79, 81, 3: method steps
- 87, 89, 91, 93, 95, 97: method part
- a to j: method steps
- 92, 94, 96: arrows and feedback
- 101, 116, 122: abscissa
- 103, 118, 124: ordinate
- 105: measured operational parameter
- 107: sample measured operational parameter
- 109: bins
- 111: sampling interval
- 113: sampling time points
- 100, 117, 115: graphs
- 115: amplitude distribution
- 117: frequency distribution

## Claims

1. Method for estimating a life indicating quantity of a component (46, 48, 38, 40, 44, 36, 22, 19, 28, 50) of a gas turbine engine (10), the method comprising:
sampling (77) values or amplitudes (105, 107) of at least one engine parameter over time (101), the engine parameter influencing the life of the component; and
determining (83) the life indicating quantity of the component based on the sampled values applying digital data processing in the time domain and/or frequency domain, in particular using a convolution operation (step j).

2. Method according to claim 1, wherein determining (83) the life indicating quantity includes:
determining (79) an amplitude distribution in the time domain (115) and/or an energy/power distribution (117) in the frequency domain of at least one measured engine parameter;
accessing (81) reference data associating at least one reference amplitude of the engine parameter and a reference life indicating quantity and/or associating at least one reference time change of the amplitude of the engine parameter and a reference life indicating quantity; and
determining (83) the life indicating quantity of the component based on the reference data, the amplitude distribution in the time domain (115) and/or the energy or power distribution in the frequency domain (117).

3. Method according to claim 2, wherein the determining (83) the life indicating quantity includes:
determining (step b) a relationship between stress of the component and the at least one engine parameter; and/or
determining (step b) a relationship between a temperature of the component and the at least one engine parameter; and
determining (step c), in particular from normalized standard specimen or component rig test, a relationship between the life indicating quantity and the stress and/or the temperature of the component,
wherein the reference data in particular comprise (step d) first reference data including a reference life indicating quantity for at least one standard and/or normalized material test.

4. Method according to claim 3, wherein the reference data further comprise second reference data (step k) associating the measured amplitudes (105, 107) of the at least one engine parameter over time (101) with a result of inspection and/or testing, in particular engine testing, of the component regarding the component integrity,
wherein the reference life indicating quantity for at least one simple input loading condition is determined based on the second reference data, in particular from a de-convolution operation (step 1).

5. Method according to one of the preceding claims, further comprising:
declaring for each amplitude in the amplitude distribution an associated first partial life indicating quantity; and/or
declaring for each frequency in the energy or power distribution an associated second partial life indicating quantity,
wherein determining the life indicating quantity of the component comprises using the declared first partial life indicating quantities and/or the declared second partial life indicating quantities.

6. Method according to one of the preceding claims, wherein determining the life indicating quantity comprises:
computing a sum of reference life indicating quantities and/or of the declared first partial life indicating quantities and/or of the declared second partial life indicating quantities weighted using the amplitude distribution in the time domain (115) and/or an energy or power distribution (117) in the frequency domain (117).

7. Method according to one of the preceding claims, further comprising:
using extrapolation and/or interpolation and/or materials laws/models to determine further reference life indicating quantities for amplitudes and/or changes of amplitudes comprised in the amplitude distribution in the time domain and/or energy or power distribution in the frequency domain, which are not present in the reference amplitude and/or reference time change of the amplitude,
wherein the life indicating quantity is further determined based on the further reference life indicating quantities,
the method in particular further comprising:
including the further reference life indicating quantities in the sum weighted using the amplitude distribution and/or an energy or power distribution.

8. Method according to one of the preceding claims, wherein determining the amplitude distribution and/or the frequency distribution comprises:
sampling (step e) the measured engine parameter (105); and/or
digitizing (step f) the measured amplitudes and/or time changes of the measured amplitudes; and/or
cleaning (step f) the digitized amplitudes and/or time changes of the measured amplitudes, in particular using a filter and/or restoration ; and/or
truncating the signals ; and /or
binning the digitized amplitudes and/or time changes; and/or
counting a number of samples in each bin (109), the method in particular further comprising:
determining (step h) correlations between at least two operational parameters; and/or
characterizing (step i) the digitized amplitudes and/or time changes in the time domain and/or the frequency domain.

9. Method according to one of the preceding claims, further comprising:
determining a temperature and/or stress of the component;
correcting the reference data for the determined temperature and/or stress;
using the corrected reference data for determining the life indicating quantity of the component,
wherein correcting the reference data for the determined temperature and/or stress in particular comprises:
accessing at least one generic table of generic properties of the component material, associating the life indicating quantity as a function of temperature and/or stress and/or
accessing at least one specific entry of specific material properties of the component, associating the life indicating quantity as a function of temperature and/or stress.

10. Method according to one of the preceding claims, further comprising:
selecting the at least one engine parameter from plural engine parameters; and/or
defining a relationship between the engine parameter and at least one physical influence the component is exposed to, the method in particular further comprising:
defining, in particular utilizing material laws, a relationship between the at least one physical influence and the life indicating quantity.

11. Method according to one of the preceding claims, further comprising:
correlating at least one (p2, p3, ...) of the at least one engine parameter with one other (p1) of the at least one engine parameter;
transforming the amplitude distribution (115) and/or the spectrum distribution (117) of the measured engine parameter to an amplitude distribution and/or a spectrum distribution of the other one of the at least one engine parameter.

12. Method according to one of the preceding claims, wherein the engine parameter is defined from a number of basic engine parameters, wherein the engine parameter is in particular a dimensionless quantity, built from other engine parameters.

13. Method according to one of the preceding claims, further comprising:
analyzing the energy/power distribution, in order to determine a relative contribution of a steady state loading and a transient, temporally altering, loading of the component,
wherein the relative contribution is in particular determined by comparing a value of the energy/power distribution for frequency substantially zero with values, in particular a sum of values, with the energy/power distribution for frequencies different from zero.

14. Method according to one of the preceding claims, wherein the at least one engine parameter includes exactly two engine parameters which exhibit a low correlation, wherein the amplitude distribution (115) and/or an energy/power distribution (117) is represented as a two dimensional image.

15. Arrangement (70) for estimating a life indicating quantity (life time/estimating damage) of a component of a gas turbine engine, the arrangement comprising:
an input port (68) adapted to receive measuring amplitudes (105) of at least one engine parameter over time (101), the engine parameter influencing the life of the component;
a processor and associated electronic components (72) adapted to determine (83) the life indicating quantity of the component based on the measured amplitudes applying digital data processing in the time domain and/or frequency domain, in particular using a convolution operation (step j), wherein the processor (72) is in particular further adapted
to determine (79) an amplitude distribution in the time domain and/or an energy or power distribution in the frequency domain of the measured engine parameter,
to access (81) reference data associating at least one reference amplitude of the engine parameter and a reference life indicating quantity and/or associating at least one reference time change of the amplitude of the engine parameter and a reference life indicating quantity, and
to determine (83) the life indicating quantity of the component based on the reference data, the amplitude distribution in the time domain and/or the energy or power distribution in the frequency domain.
